# EUROPEAN PATENT APPLICATION

(11) **EP 1 847 309 A1**
(43) Date of publication of application: **24.10.2007**
(21) Application number: 07105840.8
(22) Date of filing: 10.04.2007
(51) Int. Cl.: B01D 46/52, B01D 46/10, B60H 3/06

(54) **Filter**

(30) Priority: 20.04.2006 JP 2006116669
(71) Applicant: Sanden Corporation, Isesaki-shi, Gunma 372-8502 (JP)
(72) Inventor: Imafuji, Tomohisa, Isesaki-shi Gunma 372-8502 (JP); Hosoya, Kazuki, Isesaki-shi Gunma 372-8502 (JP)
(74) Representative: Haley, Stephen

(57) **Abstract**

Disclosed is a filter (1) comprising a sheet-like filter material (2) capable of being folded in a pleat form, two filter frame members (3) each provided on each side of the filter material (2) and each free to be expended and folded in the longitudinal direction of filter material (2), and a plurality of support members (4) appropriately arranged in the longitudinal direction of the filter material (2) and each of which extends between two filter frame members (3) in the transverse direction of the filter material (2). By this invention, provided is a filter excellent in attachment and detachment property in a small space, and having a sufficient strength at a simple structure, and which can be manufactured at a reduced cost.

## Description

The present invention relates to a filter used at a pleat form, and specifically, to a filter excellent in attachment/detachment property and suitable in use for an air conditioning system for a vehicle, etc.

For example, for a filter for cleaning air in a vehicle interior in an air conditioning system for a vehicle, requirements for simplifying the structure, thinning the filter and reducing the cost for manufacturing the filter have been increased, accompanied with recent requirements for making the air conditioning system smaller and lighter. Because an air conditioning system for a vehicle is usually disposed in an instrument panel of the vehicle, it is frequently hard to ensure a working space for attaching and detaching a filter sufficiently. Therefore, known is a filter having a structure in which a part of the filter is folded for it attachment and detachment (for example, JP-A-2005-7361). Further, also known is a structure in which the strength and the deformation of a simplified and thinned filter are supported by the side of an air conditioner case, particularly, in which the outer circumferential part and the central part of a thinned filter are reinforced by supporting portions (for example, JP-A-2000-280737).

In the structure disclosed in JP-A-2005-7361, however, because a filter frame incorporating a filter material is structured as a divided and foldable configuration and each of the divided filter frames is not made so small, it is insufficient to make the whole of the filter small, and simplification and cost down of the whole of the filter are also insufficient. Therefore, improvement of the workability for attaching and detaching the filter in a small space is also insufficient.

Further, in the structure disclosed in JP-A-2000-280737 in which the outer circumferential part and the central part of a thinned filter are reinforced by supporting portions, there is the following problem. Namely, a simplified and thinned filter is generally poor in strength, and during a long-term use, it is likely to be deformed by an increase of a pressure loss accompanied with a clogging of the filter. On the other hand, in the structure disclosed in JP-A-2000-280737 in which the strength of the filter is increased, the property for attaching and detaching the filter within a small space tends to deteriorate, and the reinforcement for increasing the filter strength causes an increase of the cost for manufacturing the filter.

Accordingly, it would be desirable to provide a filter which is excellent in attachment and detachment property in a small space, in which a sufficient strength can be ensured while being formed in a simple structure, and which can be manufactured at a reduced cost.

A filter according to the present invention comprises a sheet-like filter material capable of being folded in a pleat form; two filter frame members each provided on each side of the filter material in the transverse direction of the filter material, each of the two filter frame members being free to be expended and folded in the longitudinal direction of the filter material; and a plurality of support members arranged in the longitudinal direction of the filter material, each of the support members extending between the two filter frame members in the transverse direction of the filter material. Namely, the filter material itself is structured so that it is in a sheet-like form when it is not attached and it is in a pleat form folded along a folded form of the filter frame members when it is attached, and the strength of the filter material itself is appropriately enhanced by the plurality of support members extending between the filter frame members. The folded form of the filter material folded in a pleat form and the folded form of the folded filter frame members may be basically the same, and there is no uselessness in structural members as the whole of the filter. Therefore, the structure is very simple, and while the whole of the filter can be easily made small, the filter material can be surely held at a target form by the filter frame members and the support members, and a structure excellent in strength can be achieved.

In the filter according to the present invention, it is preferred that each of the two filter frame members has a structure regulating a pleat angle of the pleat form in which the filter material is folded. In such a structure, when the filter is attached to a predetermined attachment place, the filter being folded in a pleat form can be kept at a form having a desirable pleat angle.

In this case, it is preferred that the pleat angle regulating portions of the pleat angle regulating structures of the two filter frame members are provided at positions synchronous with each other in the longitudinal direction of the filter material in a substantially same form (a substantially same structure). In such a synchronous structure, it becomes possible to smoothly turn the filter material having been in a sheet form into a desirable pleat form when being attached, without being distorted.

Thus, the filter according to the present invention is most characterized in that the filter material is structured so as to be freely turned between the sheet form and the pleat form. For example, the filter according to the present invention is constructed so that the filter material is kept in a plane-like sheet form at a free condition realized by expanding the two filter frame members, and so that the filter material is kept in a pleat form at a folded condition realized by inserting the two filter frame members into a predetermined attachment place.

In such a filter according to the present invention, a structure may be also employed wherein the support members are constructed from a same material as that of the filter material. In such a structure, the manufacture of the filter may be facilitated, and the structure may be further simplified.

Further, it is also preferred that creases are given to the filter material for folding the filter material in a pleat form. By giving the creases beforehand, when the filter material is turned from a plane-like sheet form to a pleat form, a smoother and easier turning becomes possible. Therefore, the attaching property can be improved, and the detaching property can also be improved.

Although the use of the filter according to the present invention is not particularly limited, typically the filter can be applied to a case where the filter material is a filter material for dust collection. Further, the filter can also be applied to a case where the filter material is a filter material for deodorization. Of course, the filter can also be applied to a case where both functions of dust collection and deodorization are required.

Furthermore, because the filter according to the present invention is particularly effective for a case where improvement of attachment and detachment property in a small space is required, the filter is suitable for use in an air conditioning system for a vehicle.

Although a main target of the present invention is an air filter, the present invention may be applied also to a filter for liquid fluid or gas/liquid mixed liquid.

Thus, in the filter according to the present invention, while an excellent attachment and detachment property of the filter particularly in a small space can be achieved, the structure of the whole of the filter can be simplified and made small and the strength thereof can be ensured. Further, because of its simple structure, the cost for manufacturing the filter can also be reduced.

Further features and advantages of the present invention will be understood from the following detailed description of a preferred embodiment of the present invention with reference to the accompanying figures, of which:
Fig. 1 as a partial perspective view of a filter according to an embodiment of the present invention, showing a state before attachment.
Fig. 2 is a partial perspective view of the filter depicted in Fig. 1, showing a state during attachment.

Hereinafter, a desirable embodiment of the filter according to the present invention will be explained referring to figures.

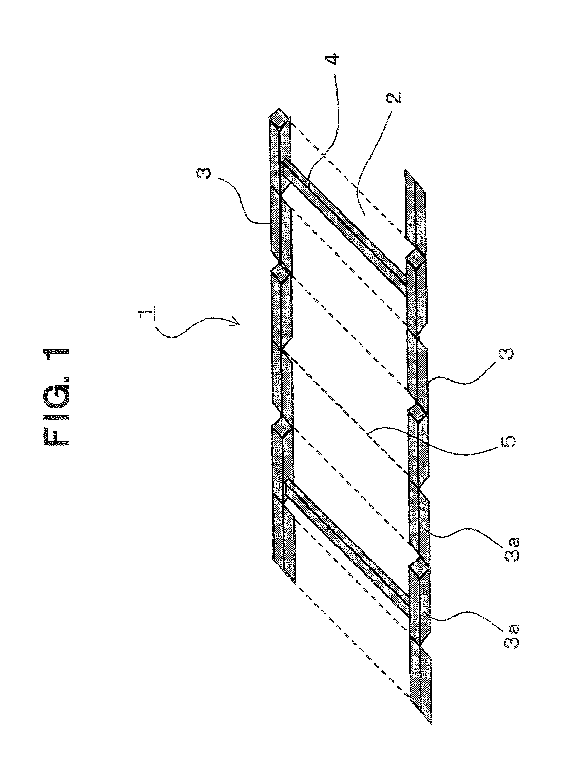

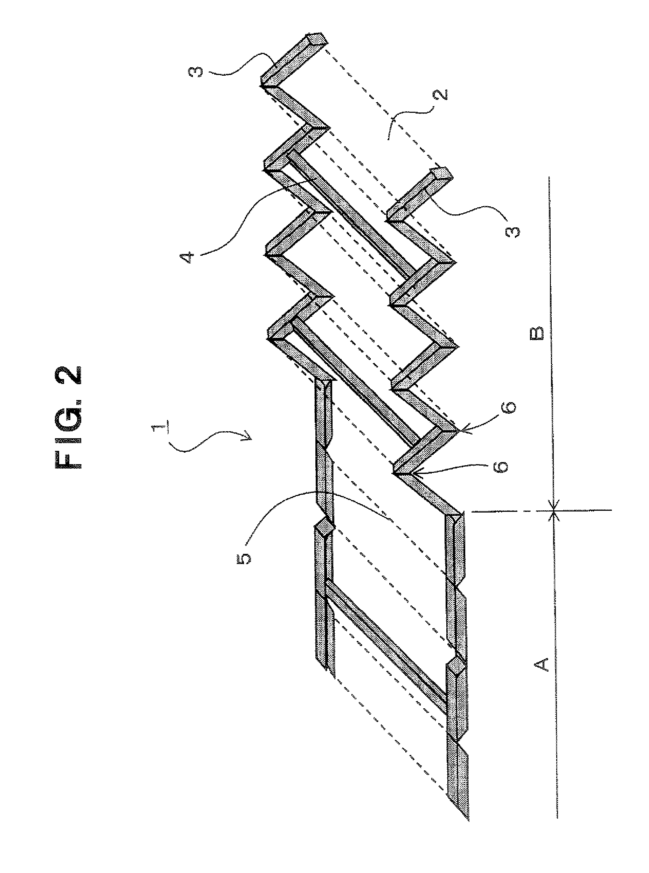

Figs. 1 and 2 depict a filter according to an embodiment of the present invention, and show a filter suitable to a case required for attaching and detaching the filter in a small space, particularly, suitable for use in an air conditioning system for a vehicle. Fig. 1 shows a state before attachment, and Fig. 2 shows a state during attachment, respectively.

In Figs. I and 2, a filter 1 comprises a sheet-like filter material 2 capable of being folded in a pleat form, two filter frame members 3 each provided on each side of filter material 2 in the transverse direction of filter material 1 which are free to be expended and folded in the longitudinal direction of filter material 2, and a plurality of support members 4 arranged in the longitudinal direction of filter material 2, each extending between two filter frame members 3 in the transverse direction of filter material 2. In this embodiment, filter frame members 3 on both sides and support members 4 are formed from an identical material. Creases 5 each extending in the transverse direction of filter material 2 are given to filter material 2 for folding filter material 2 in a pleat form, at positions corresponding to the folded portions of filter material 2 when filter material 2 is folded. Each crease 5 extends between filter frame members 3 over the entire width of filter material 2.

Two filter frame members 3 provided on both sides of filter material 2 in the transverse direction of filter material 2 are structured in a substantially same form, namely, in a formation where the variations of both filter frame members 3 are synchronous with each other. Each filter frame member 3 is formed by connecting a plurality of filter frame member pieces 3a each of which has a plan shape of a rectangle in Fig. 1 and a vertical sectional shape of a parallelogram. In this connection structure, adjacent filter frame member pieces 3a either may be formed integrally with each other or may be formed separately from each other. In a case where filter frame member pieces 3a are formed separately and they are connected to each other, for example, adjacent filter frame member pieces 3a basically may be formed separately from each other and the adjacent filter frame member pieces 3a may be connected to each other by filter material 2 continuously extending in the longitudinal direction. There exists a predetermined angle between sides of the above-described parallelograms of adjacent filter frame member pieces 3a, and a pleat angle regulating structure for filter material 2 folded into a pleat form is formed by folding adjacent filter frame member pieces 3a with each other and bringing these sides of the parallelograms of adjacent filter frame member pieces 3a into contact with each other as shown in Fig. 2. Pleat angle regulating portions 6, that is, the contact portions of the sides of the parallelograms of adjacent filter frame member pieces 3a, of the pleat angle regulating structures of two filter frame members 3 are provided at positions synchronous with each other in the longitudinal direction of filter material 2 in a substantially same form (in structures synchronous with each other).

Before filter 1 is attached to a predetermined attachment place, as shown in Fig. 1, filter 1 is in a free condition where filter frame members 3 are expanded and filter material 2 is expanded in a plane-like sheet. When filter 1 is attached to the predetermined attachment place, as shown in Fig. 2, filter 1 is subsequently folded naturally by an insertion resistance by inserting filter frame members 3 from a non-attachment region A into a predetermined attachment region B. At that time, the pleat angle regulating function of the pleat angle regulating structure is exhibited naturally by the above-described contact of the sides of the parallelograms of adjacent filter frame member pieces 3a. Accompanied with folding of both filter frame members 3, filter material 2 is automatically turned subsequently into a pleat form having a predetermined folding angle (a predetermined pleat angle). Further, because creases 5 are given beforehand to filter material 2 at the positions corresponding to the folding positions of the pleat form, this turning into the pleat form may be proceeded very smoothly. At a stage where the attachment is completed, the whole of filter material or the whole of the area thereof required for the attachment is formed as a predetermined final pleat form, support members 4 are appropriately disposed in the pleat form in the longitudinal direction of filter material 2, and therefore, the strength required for the filter can be ensured in this formation.

When filter 1 is detached, an inverse form turning operation as compared with the above-described form turning operation is performed, filter I present in attachment region B is subsequently expanded to the plane-like form shown in Fig. 1, automatically by pulling it out.

Thus, because the form turning between the plane-like form and the pleat form is performed automatically and naturally depending upon the attachment and detachment operation, the property for the attachment and detachment can be greatly improved. Further, before attachment, because the filter is in a plane-like form and a large space is not necessary, even if there is only a small space, the handling and operating property is very good. Moreover, because the predetermined pleat formation is formed by filter material 2 and filter frame members 3, there are no useless members at all. Further, a desirable pleat form can be surely kept by the appropriately disposed support members 4, and the required strength of filter material 2, ultimately, the required strength of the whole of filter 1, can be ensured. Furthermore, because there are no useless members at all, the whole of filter 1 can be easily made small, and manufactured at a reduced cost.

The filter according to the present invention can be applied to a filter in any field, and in particular, it is suitable for a field requiring an improvement of the property for attaching and detaching a filter, especially, as an air filter for an air conditioning system for a vehicle.

## Claims

1. A filter comprising:
a sheet-like filter material capable of being folded in a pleat form;
two filter frame members each provided on each side of said filter material in the transverse direction of said filter material, each of said two filter frame members being free to be expended and folded in the longitudinal direction of said filter material; and
a plurality of support members arranged in the longitudinal direction of said filter material, each of said support members extending between said two filter frame members in the transverse direction of said filter material.

2. The filter according to claim 1, wherein each of said two filter frame members has a structure regulating a pleat angle of said pleat form in which said filter material is folded.

3. The filter according to claim 2, wherein pleat angle regulating portions of pleat angle regulating structures of said two filter frame members are provided at positions synchronous with each other in the longitudinal direction of said filter material in a substantially same form.

4. The filter according to any preceding claim, wherein said filter is constructed so that said filter material is kept in a plane-like sheet form at a free condition realized by expanding said two filter frame members, and so that said filter material is kept in a pleat form at a folded condition realized by inserting said two filter frame members into a predetermined attachment place.

5. The filter according to any preceding claim, wherein said support members are constructed from a same material as that of said filter material.

6. The filter according to any preceding claim, wherein creases are given to said filter material for folding said filter material in a pleat form.

7. The filter according to any preceding claim, wherein said filter material is a filter material for dust collection.

8. The filter according to any of claims 1 to 6, wherein said filter material is a filter material for deodorization.

9. The filter according to any preceding claim, wherein said filter material is used for an air conditioning system for a vehicle.
